# FASCICULE DE BREVET EUROPEEN

(11) **EP 4 314 532 B1**
(45) Date de publication et mention de la délivrance du brevet: **26.08.2026**
(21) Numéro de dépôt: 22715142.0
(22) Date de dépôt: 22.03.2022
(51) Int. Cl.: F02K 1/60, F02K 1/62, F02K 1/72, F02K 1/76

(54) **SYSTÈME D'ACTIONNEMENT POUR INVERSEUR DE POUSSÉE À GRILLES**
BETÄTIGUNGSSYSTEM FÜR EINEN KASKADENSCHUBUMKEHRER
ACTUATING SYSTEM FOR A CASCADE THRUST REVERSER

(30) Priorité: 25.03.2021 FR 2103045
(43) Date de publication de la demande: 07.02.2024
(73) Titulaire: Safran Nacelles, 76700 Gonfreville-l'Orcher (FR)
(72) Inventeur: PEYRON, Vincent Jean-François, 77550 MOISSY-CRAMAYEL (FR); BOILEAU, Patrick André, 77550 MOISSY-CRAMAYEL (FR)
(74) Mandataire: Santarelli
(86) Numéro de dépôt international: PCT/FR2022/050525
(87) Numéro de publication internationale: WO 2022/200728

(56) Documents cités:
- FR-A1- 2 965 588
- FR-A1- 2 983 173
- FR-A1- 3 059 299

## Description

### Domaine technique

L'invention se rapporte au domaine des inverseurs de poussée pour ensemble propulsif d'aéronef et, plus spécifiquement, au système d'actionnement de tels inverseurs. L'invention présente un intérêt particulier pour les inverseurs à grilles, notamment mais non limitativement lorsque les grilles sont coulissantes.

### État de la technique antérieure

Un inverseur à grilles conventionnel comprend une partie mobile en translation longitudinale entre une position de poussée directe et une position d'inversion de poussée sous l'action d'un système d'actionnement comportant des vérins mécaniques et un ou plusieurs moteurs électriques.

Un vérin mécanique d'inverseur comprend typiquement une vis et un écrou qui coopèrent l'un avec l'autre par l'intermédiaire de billes de manière à former une liaison hélicoïdale. Une rotation de la vis par rapport à l'écrou entraîne ainsi une translation de la vis par rapport à l'écrou, et réciproquement. Un vérin d'inverseur conventionnel comprend en outre un tube d'extension solidaire de l'écrou et formant un logement pour la vis.

Pour pouvoir déplacer la partie mobile entre les positions de poussée directe et d'inversion de poussée, une extrémité de la vis est reliée à la partie mobile tandis que l'écrou est relié à une partie fixe de l'inverseur, ou réciproquement.

Entre autres inconvénients, un vérin ainsi agencé est soumis à des contraintes mécaniques entraînant un risque de flambage de la vis, compte tenu notamment de la distance séparant l'écrou et l'extrémité de liaison de la vis.

Des inverseurs de poussée selon l'art antérieur sont décrits dans les documents FR2965588A1, FR2983173A1 et FR3059299A1.

### Exposé de l'invention

Un but de l'invention est de procurer un inverseur de poussée de type à grilles permettant de réduire les inconvénients associés aux vérins mécaniques conventionnels et de réduire notamment le risque de flambage.

Un autre but de l'invention est de procurer un système d'actionnement permettant de réduire la masse de l'inverseur et son coût de fabrication.

L'invention vise aussi à améliorer les performances aérodynamiques de l'ensemble propulsif, notamment en configuration d'inversion de poussée.

A cet effet, l'invention a pour objet un inverseur de poussée pour ensemble propulsif d'aéronef, comprenant une partie fixe, une partie mobile et au moins un actionneur, l'actionneur comprenant un premier organe et un deuxième organe qui coopèrent l'un avec l'autre de sorte à pouvoir être déplacés l'un par rapport à l'autre entre une première position et une deuxième position définissant une course de l'actionneur, l'un parmi le premier organe et le deuxième organe étant relié à la partie fixe de l'inverseur par un premier élément de liaison, l'autre parmi le premier organe et le deuxième organe étant relié à la partie mobile de l'inverseur par un deuxième élément de liaison, l'inverseur étant configuré de sorte qu'un déplacement du premier organe et du deuxième organe l'un par rapport à l'autre entre la première et la deuxième position entraîne un déplacement en translation de la partie mobile par rapport à la partie fixe respectivement entre une position de poussée directe et une position d'inversion de poussée.

Selon l'invention, lorsque le premier organe et le deuxième organe sont l'un par rapport à l'autre dans la première position, la distance entre le premier élément de liaison et le deuxième élément de liaison est inférieure à la course de l'actionneur.

Ce principe de montage permet de réduire très significativement le risque de flambage, en particulier lorsque l'actionneur est déployé, c'est-à-dire lorsque les premier et deuxième organes sont l'un par rapport à l'autre dans la deuxième position et que la partie mobile de l'inverseur est en position d'inversion de poussée.

L'actionneur est de préférence un vérin à vis, la vis formant ledit premier organe, le vérin comprenant un écrou coopérant avec la vis et formant ledit deuxième organe.

De préférence, l'inverseur comprend un élément d'amortissement recevant une extrémité de la vis lorsque la partie mobile se trouve en position de poussée directe, ladite extrémité de vis se situant à distance de l'élément d'amortissement lorsque la partie mobile se trouve position d'inversion de poussée. Plutôt que de laisser cette extrémité de vis en porte-à-faux en configuration de poussée directe, sa coopération avec l'élément d'amortissement permet avantageusement de limiter les vibrations de la vis du vérin.

Alternativement, l'extrémité de la vis est encastrée dans un cadre avant ou arrière de grilles, ces cadres servant classiquement au support et à la fixation des grilles au niveau de leurs extrémités avant et arrière, respectivement. Par encastrement, il est entendu à minima un blocage en translation, selon la direction de la vis correspondant préférentiellement à la direction axiale, de l'extrémité de la vis par rapport au cadre avant ou arrière de grilles. En revanche, une liaison pivot ou rotule est possible entre ces deux éléments, par exemple via un roulement agencé à l'interface entre les deux.

Dans un mode de réalisation, l'actionneur est dépourvu de tube d'extension.

Dans le domaine des actionneurs de type vérin à vis, un tube d'extension désigne un organe formant un logement pour la vis et dont la longueur est proche ou identique à celle de la course du vérin, de sorte que la vis soit presque intégralement logée dans le tube lorsque le vérin est rétracté.

La suppression du tube d'extension permet de réduire la masse, l'encombrement et le coût de fabrication de l'actionneur.

La compacité d'un actionneur sans tube d'extension permet aussi de réduire l'obstruction des grilles par l'actionneur et/ou d'augmenter les performances de l'ensemble propulsif.

Selon une première variante de réalisation, la partie mobile de l'inverseur comprend des grilles de déviation.

Dans le cadre de cette première variante, le deuxième élément de liaison coopère de préférence avec un cadre avant ou arrière des grilles.

Selon une deuxième variante de réalisation, l'inverseur comprend des grilles de déviation fixes.

Dans un mode de réalisation, l'inverseur comprend un verrou tertiaire relié à la partie fixe.

Par exemple, le verrou tertiaire peut être relié à un carter de soufflante de l'inverseur et configuré pour coopérer avec la partie mobile, par exemple avec le cadre avant ou le cadre arrière des grilles.

D'une part, une telle intégration du verrou tertiaire est rendue possible par la configuration de l'actionneur qui permet de disposer de l'espace requis à cet effet tout en conservant un haut niveau de sécurité, par exemple en cas d'éclatement d'un disque de moteur.

D'autre part, un verrou tertiaire ainsi configuré permet de s'affranchir d'une structure de renfort ou d'extension et/ou de modifier les lignes aérodynamiques de l'inverseur.

Il en résulte un gain en termes de masse et de performances de l'ensemble propulsif.

Dans un mode de réalisation, le premier élément de liaison coopère avec un cadre avant de la partie fixe.

L'invention a aussi pour objet un ensemble propulsif pour aéronef, comprenant un inverseur tel que défini ci-dessus.

Dans un mode de réalisation, l'ensemble propulsif comprend un carter de soufflante, le premier élément de liaison coopérant avec le carter de soufflante.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe longitudinale d'un ensemble propulsif d'aéronef ;
[Fig. 2] est une demi-vue schématique en coupe longitudinale d'un inverseur de poussée conforme à un premier mode de réalisation de l'invention, en configuration de poussée directe ;
[Fig. 3] est une demi-vue schématique en coupe longitudinale de l'inverseur de la figure 2, en configuration d'inversion de poussée ;
[Fig. 4] est une demi-vue schématique en coupe longitudinale d'un inverseur de poussée conforme à un deuxième mode de réalisation de l'invention, en configuration de poussée directe ;
[Fig. 5] est une demi-vue schématique en coupe longitudinale de l'inverseur de la figure 4, en configuration d'inversion de poussée ;
[Fig. 6] est une demi-vue schématique en coupe longitudinale d'un inverseur de poussée conforme à un troisième mode de réalisation de l'invention, en configuration de poussée directe ;
[Fig. 7] est une demi-vue schématique en coupe longitudinale de l'inverseur de la figure 6, en configuration d'inversion de poussée ;
[Fig. 8] est une vue schématique partielle en perspective de grilles et d'un vérin de l'inverseur de la figure 6 ;
[Fig. 9] est une demi-vue schématique en coupe longitudinale d'un inverseur de poussée conforme à un quatrième mode de réalisation de l'invention, en configuration de poussée directe ;
[Fig. 10] est une demi-vue schématique en coupe longitudinale de l'inverseur de la figure 9, en configuration d'inversion de poussée.

### Description détaillée de modes de réalisation

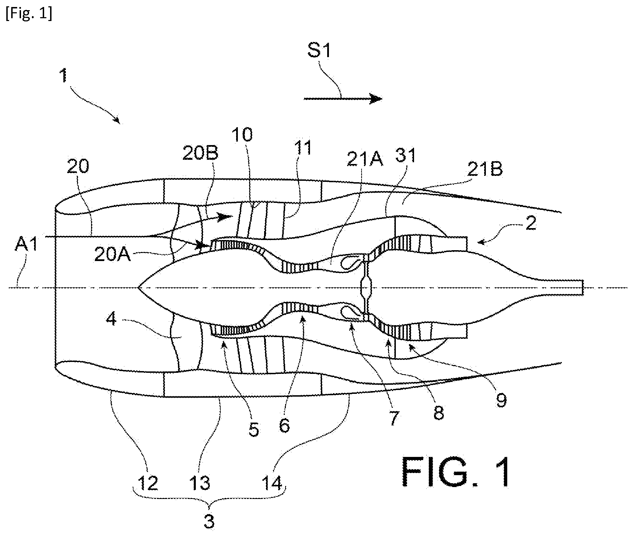

Il est représenté à la figure 1 un ensemble propulsif 1 d'aéronef présentant un axe central longitudinal A1.

Par la suite, les termes « avant » et « arrière » sont définis relativement à un sens S1 d'écoulement des gaz à travers l'ensemble propulsif 1 le long de l'axe A1 lorsque celui-ci génère une poussée.

L'ensemble propulsif 1 comprend une turbomachine 2 et une nacelle 3.

Dans cet exemple, la turbomachine 2 est un turboréacteur à double flux comprenant, de l'avant vers l'arrière, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz. Le turboréacteur 2 est doté d'un carter de soufflante 10 relié au générateur de gaz par des bras structuraux 11.

La nacelle 3 comprend une section avant formant une entrée d'air 12, une section médiane qui comporte des capots de soufflante 13 enveloppant le carter de soufflante 10 et une section arrière 14.

En fonctionnement, un écoulement d'air 20 pénètre dans l'ensemble propulsif 1 par l'entrée d'air 12, traverse la soufflante 4 puis se divise en un flux primaire 20A central et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz et délimitée radialement vers l'extérieur par la nacelle 3.

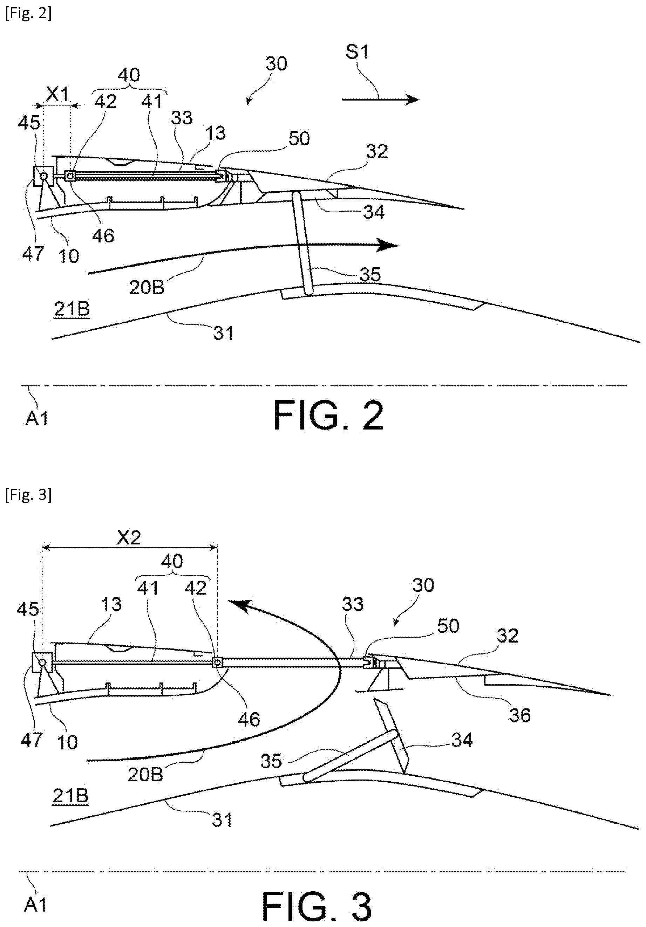

Les figures 2 et 3 illustrent un inverseur de poussée 30 conforme à un premier mode de réalisation de l'invention.

Dans la description qui suit, il est considéré que l'inverseur 30 appartient à l'ensemble propulsif 1 de la figure 1. Bien entendu, l'inverseur 30 est susceptible d'équiper un ensemble propulsif différent de celui de la figure 1.

L'inverseur 30 comprend d'une part une partie fixe formée dans cet exemple par le carter de soufflante 10, les capots de soufflante 13 et une structure interne fixe 31 enveloppant le générateur de gaz et délimitant radialement vers l'intérieur la veine secondaire 21B.

L'inverseur 30 comprend d'autre part une partie mobile, pouvant être déplacée par rapport à la partie fixe précitée.

Dans le mode de réalisation des figures 2 et 3, la partie mobile de l'inverseur 30 inclut un capot mobile 32 formant la section arrière 14 de la nacelle 3, des grilles de déviation 33, des volets d'obturation 34 et des biellettes 35.

La figure 2 montre l'inverseur 30 dans une configuration de poussée directe.

Dans cette configuration, le capot mobile 32 est dans une position de fermeture, ou position avancée, dans laquelle il est axialement en appui sur le carter de soufflante 10 et dans laquelle les grilles 33 sont logées dans un espace délimité radialement par le carter de soufflante 10 d'une part et par les capots de soufflante 13 d'autre part.

En configuration de poussée directe, les volets d'obturation 34 sont rétractés au sein d'une cavité 36 formée par le capot mobile 32.

L'inverseur 30 permet ainsi de canaliser le flux secondaire 20B vers l'arrière de l'ensemble propulsif 1 de manière à générer une poussée.

La figure 3 montre l'inverseur 30 dans une configuration d'inversion de poussée.

Dans cette configuration, le capot mobile 32 est dans une position d'ouverture, ou position reculée, dans laquelle il est axialement éloigné du carter de soufflante 10 de manière à définir une ouverture radiale de la veine secondaire 21B. Les grilles 33 s'étendent à travers cette ouverture radiale, c'est-à-dire axialement entre une extrémité arrière du carter de soufflante 10 et une extrémité avant du capot mobile 32.

En configuration d'inversion de poussée, les volets d'obturation 34 sont déployés radialement dans la veine secondaire 21B de manière à diriger le flux secondaire 20B vers les grilles 33 lesquelles permettent d'orienter le flux ainsi redirigé vers l'avant de l'ensemble propulsif 1 afin de générer une contre-poussée.

L'inverseur 30 comprend un système d'actionnement permettant de déplacer la partie mobile entre les configurations de poussée directe et d'inversion de poussée.

Dans le mode de réalisation des figures 2 et 3, le système d'actionnement est plus précisément configuré pour déplacer simultanément le capot mobile 32 et les grilles 33 en translation le long de l'axe A1.

Dans cet exemple, les grilles 33 comprennent un cadre arrière solidaire d'une extrémité avant du capot mobile 32, de sorte qu'une translation de l'un parmi le capot mobile 32 et les grilles 33 entraîne une translation correspondante de l'autre parmi le capot mobile 32 et les grilles 33.

Le déplacement du capot mobile 32 entre les positions d'ouverture et de fermeture entraîne un déplacement des volets 34 entre les positions déployée et rétractée, respectivement, sous l'action des biellettes 35. De manière conventionnelle, chaque volet 34 est articulé d'une part au capot mobile 32 et d'autre part à l'une des extrémités de l'une respective des biellettes 35, l'autre extrémité des biellettes 35 étant articulée à la structure interne fixe 31.

L'invention se rapporte plus spécifiquement à la structure et à la configuration du système d'actionnement.

Dans cet exemple, le système d'actionnement comprend un vérin mécanique 40 de type vérin à vis à billes, c'est-à-dire comprenant une vis 41 et un écrou 42 qui coopèrent l'un avec l'autre par l'intermédiaire de billes de manière à former une liaison hélicoïdale.

Le vérin 40 est dans cet exemple entraîné par un moteur électrique conventionnel (non représenté).

Bien entendu, le système d'actionnement peut comprendre plusieurs vérins semblables au vérin 40 qui agissent simultanément sur la partie mobile de l'inverseur 30, ainsi qu'un ou plusieurs moteurs électriques d'entraînement du ou des vérins. La description qui suit s'applique par analogie à chacun des vérins d'un tel système d'actionnement.

Dans le mode de réalisation des figures 2 et 3, la vis 41 du vérin 40 comprend une extrémité avant reliée au carter de soufflante 10 par un premier élément de liaison 45 et l'écrou 42 est relié à un cadre avant des grilles 33 par un deuxième élément de liaison 46.

Le système d'actionnement comprend un mécanisme de transmission de mouvement 47 comportant dans cet exemple des pignons (non représentés) permettant d'entraîner la vis 41 du vérin 40 en rotation sous l'action du moteur.

Dans cet exemple, les pignons sont coniques et coopèrent d'une part avec l'extrémité avant de la vis 41, c'est-à-dire au niveau du premier élément de liaison 45, et d'autre part avec un arbre d'entrée (non représenté) s'étendant circonférentiellement et étant relié au moteur par l'intermédiaire d'un arbre flexible (non représenté).

Le deuxième élément de liaison 46 relie fixement l'écrou 42 au cadre avant des grilles 33 et comprend un système d'articulation tel qu'un cardan ou une rotule permettant de limiter la flexion dans la vis 41 qui pourrait être générée par des déplacements relatifs radiaux et tangentiels entre l'extrémité avant de la vis 41 et l'écrou 42, que ce soit en configuration de poussée directe ou d'inversion de poussée.

Ainsi, la vis 41 et l'écrou 42 coopèrent l'un avec l'autre de sorte que, lorsque la vis 41 est entraînée en rotation par le moteur, l'écrou 42 translate par rapport à la vis 41 entre une première position, illustrée à la figure 2, et une deuxième position, illustrée à la figure 3.

La vis 41 étant axialement maintenue par le premier élément de liaison 45 par rapport à la partie fixe de l'inverseur 30 et l'écrou 42 étant solidaire des grilles 33, la translation de l'écrou 42 par rapport à la vis 41 se traduit par une translation de l'écrou 42 par rapport à la partie fixe de l'inverseur 30 et par conséquent par une translation correspondante des grilles 33 par rapport à la partie fixe de l'inverseur 30.

Lorsque l'écrou 42 est dans la première position, le deuxième élément de liaison 46 est situé à une distance axiale X1 du premier élément de liaison 45 (figure 2). Lorsque l'écrou 42 est dans la deuxième position, le deuxième élément de liaison 46 est situé à une distance axiale X2 du premier élément de liaison 45 (figure 3).

La différence entre les distances X2 et X1, c'est-à-dire la distance entre la première et la deuxième position de l'écrou 42, définit une course de l'écrou 42, aussi appelée course du vérin 40.

Dans cet exemple, la course du vérin 40 correspond à une distance proche la longueur de la vis 41, qui est en l'occurrence supérieure à 80% de la longueur de la vis 41 (voir figures 2 et 3).

Le vérin 40 est configuré de sorte que la translation de l'écrou 42 entre la première et la deuxième position entraîne une translation correspondante des grilles 33 et du capot mobile 32 respectivement entre la position de poussée directe et la position d'inversion de poussée.

En référence à la figure 2, la distance X1 séparant le premier élément de liaison 45 du deuxième élément de liaison 46 lorsque l'écrou 42 est dans la première position est inférieure à la course du vérin 40.

Il en résulte que la distance X2 séparant le premier élément de liaison 45 du deuxième élément de liaison 46 lorsque l'écrou 42 est dans la deuxième position (figure 3) est proche de la longueur de la vis 41, ce qui permet de réduire significativement le risque de flambage du vérin 40 par rapport à un vérin d'inverseur conventionnel.

En effet, un vérin d'inverseur conventionnel comprend un tube d'extension solidaire de l'écrou dont la longueur est au moins égale à la course du vérin de sorte que, lorsque le vérin est déployé, la distance entre les extrémités de fixation du vérin est très largement supérieure à la course du vérin, par exemple proche de deux fois la course du vérin.

En configuration d'inversion de poussée (figure 3), les efforts qui s'appliquent sur la partie mobile de l'inverseur 30 et en particulier sur le capot mobile 32 transitent par des éléments structuraux ponctuels qui relient l'un à l'autre le cadre arrière et la cadre avant des grilles 33.

Ainsi, la partie des grilles 33 remplissant la fonction de déviation et qui est portée par les cadres avant et arrière peut être non-structurale et, compte tenu de l'absence de tube d'extension, présenter une surface maximisée.

Par ailleurs, en configuration d'inversion de poussée (figure 3), la vis 41 s'étend axialement en avant des grilles 33 de sorte qu'aucun élément du vérin 40 ne gêne le flux servant à générer la contre-poussée.

Dans ce mode de réalisation, lorsque l'inverseur 30 passe de la configuration de la figure 3 à celle de la figure 2, la vis 41 pénètre dans l'épaisseur des grilles 33. Dans une variante de réalisation, la vis 41 peut être agencée pour s'étendre radialement à l'intérieur des grilles 33.

L'inverseur 30 comprend dans cet exemple un élément d'amortissement 50 solidaire du cadre arrière des grilles 33 et configuré pour recevoir l'extrémité arrière de la vis 41 lorsque l'inverseur 30 est en configuration de poussée directe (figure 2) de manière à limiter les vibrations de la vis 41.

L'élément d'amortissement 50 est dans cet exemple une pièce conique élastiquement déformable, et dans laquelle l'extrémité de vis concernée est destinée à pénétrer en configuration de poussée directe. En revanche, en configuration d'inversion de poussée, cette même extrémité de vis se trouve à distance axialement de l'élément d'amortissement 50. Dans ce mode de réalisation, cela s'explique par le fait que la vis 41 reste fixe axialement, tandis que l'élément d'amortissement 50 est intégré à la partie mobile de l'inverseur. En effet, dans le mode de réalisation des figures 2 et 3, la vis 41 est mobile en rotation et immobile en translation, tandis que l'écrou 42 est mobile en translation et immobile en rotation.

L'élément d'amortissement 50 peut être une pièce chaudronnée réalisée en acier inoxydable, afin de présenter les caractéristiques requises d'élasticité, comme mentionné précédemment. Cette pièce est également réalisée pour offrir une résistance aux frottements, nécessaire en raison des mouvements relatifs en translation et en rotation entre la vis et cet élément d'amortissement. Enfin, elle est aussi de préférence réalisée de manière à conférer une résistance à la corrosion.

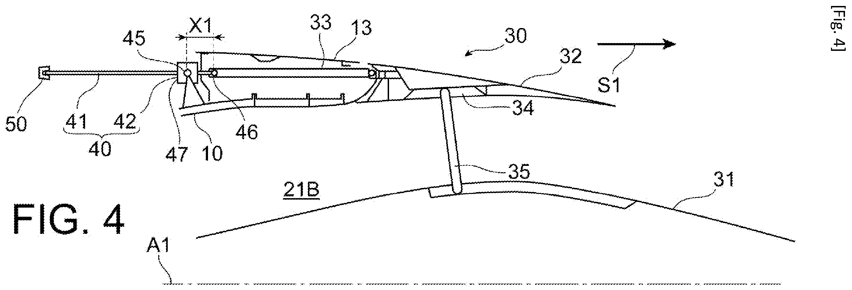

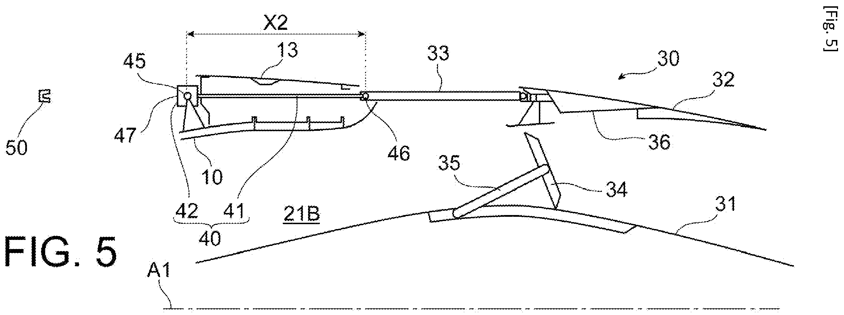

Les figures 4 et 5 illustrent un deuxième mode de réalisation présentant un montage inversé par rapport à celui des figures 2 et 3, c'est-à-dire dans lequel la vis 41 du vérin 40 est mobile en translation et immobile en rotation tandis que l'écrou 42 du vérin 40 est mobile en rotation et immobile en translation.

L'inverseur 30 des figures 4 et 5 est décrit uniquement selon ses différences par rapport à celui des figures 2 et 3.

Dans ce deuxième mode de réalisation, l'écrou 42 du vérin 40 est relié au carter de soufflante 10 par le premier élément de liaison 45 et la vis 41 du vérin 40 comprend une extrémité arrière reliée au cadre avant des grilles 33 par le deuxième élément de liaison 46.

Le mécanisme de transmission de mouvement 47 comporte dans cet exemple des pignons (non représentés) permettant d'entraîner l'écrou 42 du vérin 40 en rotation sous l'action du moteur.

Le deuxième élément de liaison 46 relie fixement la vis 41 au cadre avant des grilles 33 et comprend un système d'articulation tel qu'une rotule permettant de limiter la flexion dans la vis 41 qui pourrait être générée par des déplacements relatifs radiaux et tangentiels entre l'écrou 42 du vérin 40 et l'extrémité arrière de la vis 41, que ce soit dans les configurations de poussée directe ou d'inversion de poussée.

Ainsi, la vis 41 et l'écrou 42 coopèrent l'un avec l'autre de sorte que, lorsque l'écrou 42 est entraîné en rotation par le moteur, la vis 41 translate par rapport à l'écrou 42 entre une première position, illustrée à la figure 4, et une deuxième position, illustrée à la figure 5.

L'écrou 42 étant axialement maintenu par le premier élément de liaison 45 par rapport à la partie fixe de l'inverseur 30 et la vis 41 étant solidaire des grilles 33, la translation de la vis 41 par rapport à l'écrou 42 se traduit par une translation de la vis 41 par rapport à la partie fixe de l'inverseur 30 et par conséquent par une translation correspondante des grilles 33 par rapport à la partie fixe de l'inverseur 30.

De manière analogue au premier mode de réalisation, le premier élément de liaison 45 et le deuxième élément de liaison 46 sont situés l'un par rapport à l'autre à une distance X1 lorsque la vis 41 est dans la première position (figure 4) et une distance X2 lorsque la vis 41 est dans la deuxième position (figure 5). Ces distances présentent les mêmes propriétés que celles de l'inverseur 30 des figures 2 et 3 (voir plus haut ci-dessus).

Dans le mode de réalisation des figures 4 et 5, l'élément d'amortissement 50 appartient à la partie fixe de l'inverseur 30 et est configuré pour recevoir l'extrémité avant de la vis 41 lorsque l'inverseur 30 est en configuration de poussée directe (figure 4). Puisque la vis 41 est ici mobile axialement, l'extrémité avant de cette vis se trouve ainsi à distance axialement de l'élément d'amortissement 50 en configuration d'inversion de poussée (figure 5).

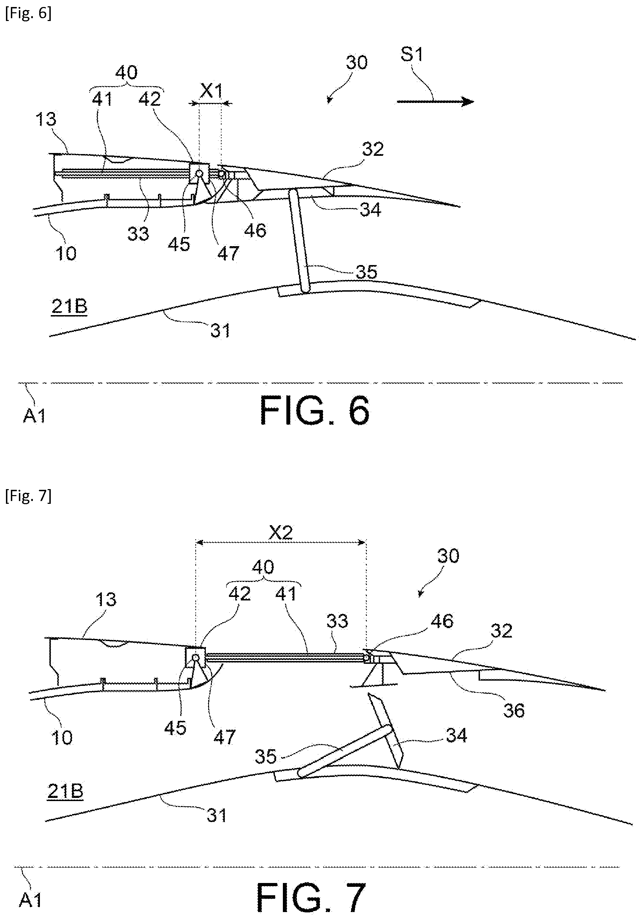

Les figures 6 et 7 illustrent un troisième mode de réalisation qui est décrit uniquement selon ses différences par rapport à celui des figures 4 et 5.

Dans ce troisième mode de réalisation, l'extrémité arrière de la vis 41 du vérin 40 est reliée par le deuxième élément de liaison 46 au cadre arrière des grilles 33 et l'extrémité avant de la vis 41 est supportée radialement et circonférentiellement par le cadre avant des grilles 33.

Bien que cela n'ait pas été représenté, l'extrémité avant de la vis 41 peut ici aussi coopérer avec un élément d'amortissement en configuration de poussée directe, d'une manière analogue à celle exposée pour les modes de réalisation précédents. Dans le présent mode, l'élément d'amortissement peut être fixé sur la partie fixe de l'inverseur.

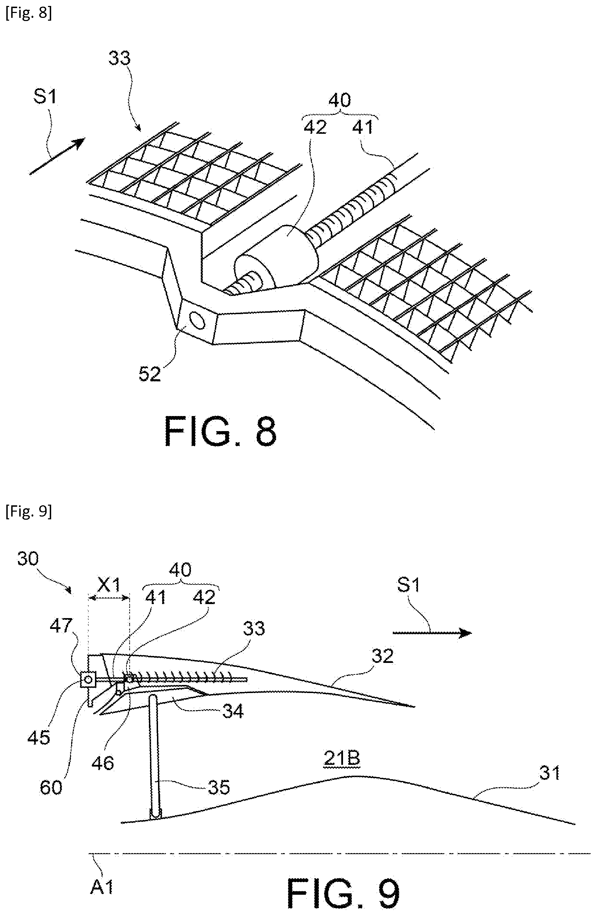

La figure 8 montre schématiquement un mode de support de la vis 41 dans lequel l'extrémité avant de la vis 41 est encastrée dans une partie 52 du cadre avant des grilles 33, qui est préférentiellement axialement décalée vers l'avant par rapport aux autres parties de ce cadre avant.

Un tel décalage axial de la partie 52 du cadre avant des grilles 33 permet de libérer un espace pour l'écrou 42 et de maximiser ainsi la course du vérin 40 sans augmenter la dimension des grilles 33.

L'encastrement précité est préférentiellement réalisé à l'aide d'un roulement, par exemple à billes ou à rouleaux, afin de permettre de transmettre des efforts radiaux et circonférentiels tout en permettant une rotation de la vis à des vitesses élevées, et avec un minimum de friction parasite. En effet, par encastrement, il est entendu à minima un blocage en translation, selon la direction de la vis, de l'extrémité de la vis par rapport à la partie 52 du cadre avant de grilles 33. Le roulement précité permet de réaliser par exemple une liaison pivot ou rotule entre ces deux éléments, en étant agencé à l'interface entre les deux.

L'extrémité avant de vis vient alors s'interfacer avec la partie 52, cette extrémité correspondant, en configuration de poussée directe, à celle la plus éloignée des points d'interface / de fixation du vérin. Il en est préférentiellement de même dans les solutions précédentes à élément d'amortissement.

Dans une variante de ce troisième mode de réalisation, la vis 41 forme un élément de guidage des grilles 33, ce qui permet éventuellement de supprimer les rails (non représentés) de guidage des grilles 33.

Dans les modes de réalisation décrits ci-dessus, les grilles 33 sont mobiles, à savoir intégrées à la partie mobile de l'inverseur. La fixation de l'extrémité avant de la vis sur la partie 52 du cadre avant des grilles 33 permet maintenir et de stabiliser cette vis, quelle que soit la position de l'inverseur (poussée directe ou inversion de poussée).

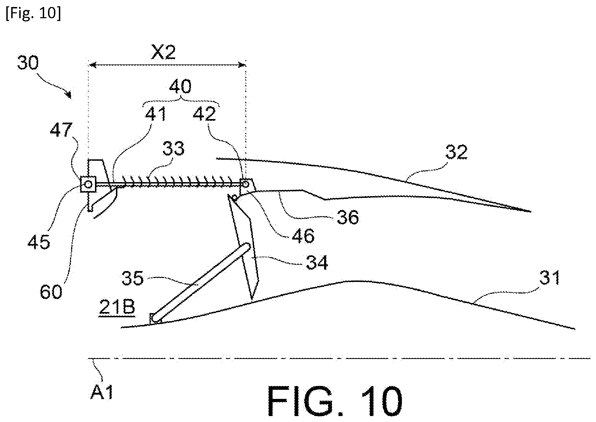

Le principe de l'invention s'applique aussi à un inverseur à grilles fixes tel que celui illustré aux figures 9 et 10 se rapportant à un quatrième mode de réalisation.

La description qui précède s'applique par analogie à ce quatrième mode de réalisation qui est essentiellement décrit ci-après selon ses différences par rapport au mode de réalisation des figures 2 et 3.

Dans l'exemple des figures 9 et 10, la partie fixe de l'inverseur 30 comprend un cadre avant 60, destiné à être positionné à l'arrière du carter de soufflante 10, et des grilles 33 solidaires de ce cadre avant 60.

En configuration de poussée directe (figure 9), le capot mobile 32 est en position avancée, en appui sur le cadre avant 60, et les grilles 33 sont logées au sein du capot mobile 32.

Le déplacement du capot mobile 32, sous l'action du vérin 40, vers la position reculée (figure 10) libère les grilles 33 qui s'étendent ainsi axialement entre une extrémité arrière du cadre avant 60 et l'extrémité avant du capot mobile 32.

Dans cet exemple, l'extrémité avant de la vis 41 du vérin 40 est reliée par le premier élément de liaison 45 au cadre avant 60 de la partie fixe de l'inverseur 30 tandis que l'écrou 42 est relié par le deuxième élément de liaison 46, intégrant un système d'articulation tel qu'un cardan ou une rotule, à une partie avant du capot mobile 32.

L'entraînement en rotation de la vis 41, via le mécanisme de transmission de mouvement 47, entraîne une translation de l'écrou 42 entre les positions des figures 9 et 10 de sorte que, de manière analogue aux modes de réalisation précédents, la distance X1 entre le premier élément de liaison 45 et le deuxième élément de liaison 46 en configuration de poussée directe (figure 9) soit inférieure à la course du vérin 40 et la distance X2 entre ces éléments de liaison 45 et 46 en configuration d'inversion de poussée (figure 10) soit proche de la longueur de la vis 41 et/ou de la course du vérin 40.

Dans cet exemple, la vis 41 s'étend radialement à l'intérieur des grilles 33.

Alternativement, la vis 41 peut être logée dans l'épaisseur des grilles 33. Selon cette alternative, l'extrémité arrière de la vis 41 est de préférence encastrée, au sens précité, dans une partie du cadre arrière des grilles 33 qui est axialement décalé vers l'arrière par rapport aux autres parties de ce cadre arrière, selon un principe analogue à celui illustré sur la figure 8. Un tel décalage axial du logement de l'extrémité de la vis par rapport au cadre arrière des grilles 33 permet de libérer un espace pour l'écrou 42 et de maximiser ainsi la course du vérin 40 sans augmenter la dimension des grilles 33.

Dans ce mode de réalisation des figures 9 et 10, une réalisation similaire à celle de la figure 8 peut être adoptée. En effet, bien que cela n'ait pas été représenté, il peut être prévu un mode de support de la vis 41 dans lequel l'extrémité arrière de cette vis est encastrée dans une partie d'un cadre arrière des grilles 33, toujours au sens explicité précédemment. Ici également, cette partie du cadre arrière sur laquelle est encastrée la vis peut être axialement décalée vers l'arrière par rapport aux autres parties de ce cadre arrière.

Alternativement, pour ce mode, une solution à élément d'amortissement d'une extrémité de la vis de vérin est également possible, comme celle exposée dans le cadre des modes de réalisation précédents.

Dans chacun des modes de réalisation décrits ci-dessus en référence aux figures 2 à 10, le vérin 40 est dépourvu de tube d'extension.

Cela permet notamment de réduire la masse de l'ensemble propulsif 1 et, dans le cadre des troisième et quatrième modes de réalisation (figures 6 à 10), de réduire la perturbation du flux traversant les grilles 33 pour générer la contre-poussée.

Dans une variante non représentée, l'inverseur 30 selon l'un quelconque des trois premiers modes de réalisation décrits ci-dessus comprend au moins un deuxième vérin mécanique ainsi que des verrous primaire, secondaire et tertiaire configurés pour verrouiller l'inverseur 30 en configuration de poussée directe. De manière connue en soi, les verrous primaire et secondaire peuvent chacun être intégrés à l'un respectif des vérins du système d'actionnement.

Selon cette variante, le verrou tertiaire est relié au carter de soufflante 10 de manière à coopérer avec les grilles 33 lorsque l'inverseur 30 est en configuration de poussée directe.

Plus précisément, le verrou tertiaire peut coopérer avec le cadre arrière des grilles 33 dans le contexte des premier et deuxième modes de réalisation et avec leur cadre avant dans le contexte du troisième mode de réalisation.

D'une part, un tel montage du verrou tertiaire assure un verrouillage efficace grâce notamment à la position respective des éléments de liaison 45 et 46 du vérin 40 et en particulier à la faible distance X1 les séparant l'un de l'autre. En effet, en cas par exemple d'éclatement d'un disque du turboréacteur 2, des fragments de ce disque, qui sont éjectés principalement suivant une direction radiale, ne peuvent pas sectionner à la fois le verrou tertiaire et la vis 41 du vérin 40 entre les éléments de liaison 45 et 46.

D'autre part, ainsi positionné, le verrou tertiaire ne nécessite aucune structure de fixation et/ou de renfort supplémentaire, ce qui permet de réduire la masse de l'inverseur 30.

Une telle configuration permet en outre d'améliorer l'aérodynamisme de la nacelle 3, par rapport à un inverseur conventionnel dans lequel le verrou tertiaire est monté à l'arrière de l'inverseur et dans lequel les lignes aérodynamiques sont modifiées pour permettre un tel montage.

L'invention est compatible avec de nombreuses architectures d'inverseur 30, notamment des architectures « en C » et « en D », connues sous l'appellation anglo-saxonne « C-Duct » et « D-Duct » respectivement.

## Revendications

1. Inverseur de poussée (30) pour ensemble propulsif (1) d'aéronef, comprenant une partie fixe (10, 60), une partie mobile (32, 33) et au moins un actionneur (40), l'actionneur (40) comprenant un premier organe (41) et un deuxième organe (42) qui coopèrent l'un avec l'autre de sorte à pouvoir être déplacés l'un par rapport à l'autre entre une première position et une deuxième position définissant une course de l'actionneur (40), l'un parmi le premier organe (41) et le deuxième organe (42) étant relié à la partie fixe (10, 60) de l'inverseur (30) par un premier élément de liaison (45), l'autre parmi le premier organe (41) et le deuxième organe (42) étant relié à la partie mobile (32, 33) de l'inverseur (30) par un deuxième élément de liaison (46), l'inverseur (30) étant configuré de sorte qu'un déplacement du premier organe (41) et du deuxième organe (42) l'un par rapport à l'autre entre la première et la deuxième position entraîne un déplacement en translation de la partie mobile (32, 33) par rapport à la partie fixe (10, 60) respectivement entre une position de poussée directe et une position d'inversion de poussée, **caractérisé en ce que**, lorsque le premier organe (41) et le deuxième organe (42) sont l'un par rapport à l'autre dans la première position, la distance entre le premier élément de liaison (45) et le deuxième élément de liaison (46) est inférieure à la course de l'actionneur (40).

2. Inverseur (30) selon la revendication 1, dans lequel l'actionneur (40) est un vérin à vis (41), la vis (41) formant ledit premier organe, le vérin (40) comprenant un écrou (42) coopérant avec la vis et formant ledit deuxième organe.

3. Inverseur (30) selon la revendication 2, comprenant un élément d'amortissement (50) recevant une extrémité de la vis (41) lorsque la partie mobile (32, 33) se trouve en position de poussée directe, ladite extrémité de vis se situant à distance de l'élément d'amortissement (50) lorsque la partie mobile (32, 33) se trouve en position d'inversion de poussée.

4. Inverseur (30) selon la revendication 2, dans lequel une extrémité de la vis (41) est encastrée dans un cadre avant ou arrière de grilles.

5. Inverseur (30) selon l'une quelconque des revendications 1 à 4, dans lequel l'actionneur (40) est dépourvu de tube d'extension.

6. Inverseur (30) selon l'une quelconque des revendications 1 à 5, dans lequel la partie mobile comprend des grilles de déviation (33).

7. Inverseur (30) selon la revendication 6, dans lequel le deuxième élément de liaison (46) coopère avec un cadre avant ou arrière des grilles (33).

8. Inverseur (30) selon l'une quelconque des revendications 1 à 5, comprenant des grilles de déviation (33) fixes.

9. Inverseur (30) selon l'une quelconque des revendications 1 à 8, comprenant un verrou tertiaire relié à la partie fixe (10).

10. Inverseur (30) selon l'une quelconque des revendications 1 à 9, dans lequel le premier élément de liaison (45) coopère avec un cadre avant (60) de la partie fixe.

11. Ensemble propulsif (1) pour aéronef, comprenant un inverseur (30) selon l'une quelconque des revendications 1 à 10.

12. Ensemble propulsif (1) selon la revendication 11, comprenant un carter de soufflante (10), le premier élément de liaison (45) coopérant avec le carter de soufflante (10).

## Patentansprüche

1. Schubumkehrer (30) für eine Antriebseinheit (1) eines Luftfahrzeugs, umfassend einen ortsfesten Teil (10, 60), einen beweglichen Teil (32, 33) und mindestens einen Aktuator (40), wobei der Aktuator (40) ein erstes Element (41) und ein zweites Element (42) umfasst, die derart miteinander zusammenwirken, dass sie relativ zueinander zwischen einer ersten Position und einer zweiten Position bewegbar sind, wobei die erste Position und die zweite Position einen Hub des Aktuators (40) definieren, wobei entweder das erste Element (41) oder das zweite Element (42) mittels eines ersten Verbindungselements (45) mit dem ortsfesten Teil (10, 60) des Schubumkehrers (30) verbunden ist und das jeweils andere Element mittels eines zweiten Verbindungselements (46) mit dem beweglichen Teil (32, 33) des Schubumkehrers (30) verbunden ist, wobei der Schubumkehrer (30) derart eingerichtet ist, dass eine Relativbewegung des ersten Elements (41) und des zweiten Elements (42) zwischen der ersten Position und der zweiten Position eine translatorische Verschiebung des beweglichen Teils (32, 33) relativ zu dem ortsfesten Teil (10, 60) entsprechend zwischen einer Direktschubstellung und einer Schubumkehrstellung bewirkt, **dadurch gekennzeichnet, dass**, wenn sich das erste Element (41) und das zweite Element (42) relativ zueinander in der ersten Position befinden, der Abstand zwischen dem ersten Verbindungselement (45) und dem zweiten Verbindungselement (46) kleiner als der Hub des Aktuators (40) ist.

2. Schubumkehrer (30) nach Anspruch 1, wobei der Aktuator (40) ein Spindelantrieb ist, dessen Spindel (41) das erste Element bildet und der eine mit der Spindel zusammenwirkende Mutter (42) umfasst, die das zweite Element bildet.

3. Schubumkehrer (30) nach Anspruch 2, umfassend ein Dämpfungselement (50), das ein Ende der Spindel (41) aufnimmt, wenn sich der bewegliche Teil (32, 33) in der Direktschubstellung befindet, wobei das Spindelende von dem Dämpfungselement (50) beabstandet ist, wenn sich der bewegliche Teil (32, 33) in der Schubumkehrstellung befindet.

4. Schubumkehrer (30) nach Anspruch 2, wobei ein Ende der Spindel (41) in einen Vorder- oder Hinterrahmen der Ablenkgitter eingespannt ist.

5. Schubumkehrer (30) nach einem der Ansprüche 1 bis 4, wobei der Aktuator (40) kein Schubrohr aufweist.

6. Schubumkehrer (30) nach einem der Ansprüche 1 bis 5, wobei der bewegliche Teil Ablenkgitter (33) umfasst.

7. Schubumkehrer (30) nach Anspruch 6, wobei das zweite Verbindungselement (46) mit einem Vorder- oder Hinterrahmen der Ablenkgitter (33) zusammenwirkt.

8. Schubumkehrer (30) nach einem der Ansprüche 1 bis 5, umfassend feststehende Ablenkgitter (33).

9. Schubumkehrer (30) nach einem der Ansprüche 1 bis 8, umfassend eine mit dem ortsfesten Teil (10) verbundene Tertiärverriegelung.

10. Schubumkehrer (30) nach einem der Ansprüche 1 bis 9, wobei das erste Verbindungselement (45) mit einem Frontrahmen (60) des ortsfesten Teils zusammenwirkt.

11. Antriebseinheit (1) für ein Luftfahrzeug, umfassend einen Schubumkehrer (30) nach einem der Ansprüche 1 bis 10.

12. Antriebseinheit (1) nach Anspruch 11, umfassend ein Gebläsegehäuse (10), wobei das erste Verbindungselement (45) mit dem Gebläsegehäuse (10) zusammenwirkt.

## Claims

1. A thrust reverser (30) for an aircraft propulsion unit (1), comprising a fixed portion (10, 60), a movable portion (32, 33) and at least one actuator (40), the actuator (40) comprising a first member (41) and a second member (42) which cooperate with each other so as to be able to be displaced relative to each other between a first position and a second position defining a stroke of the actuator (40), one of the first member (41) and the second member (42) being connected to the fixed portion (10, 60) of the thrust reverser (30) by a first connecting element (45), the other of the first member (41) and the second member (42) being connected to the movable portion (32, 33) of the thrust reverser (30) by a second connecting element (46), the thrust reverser (30) being configured such that a displacement of the first member (41) and the second member (42) relative to each other between the first and second positions causes a translational displacement of the movable portion (32, 33) relative to the fixed portion (10, 60) respectively between a direct thrust position and a thrust reversal position, **characterised in that**, when the first member (41) and the second member (42) are relative to each other in the first position, the distance between the first connecting element (45) and the second connecting element (46) is less than the stroke of the actuator (40).

2. The thrust reverser (30) according to claim 1, wherein the actuator (40) is a screw jack (41), the screw (41) forming said first member, the jack (40) comprising a nut (42) cooperating with the screw and forming said second member.

3. The thrust reverser (30) according to claim 2, comprising a damping element (50) receiving one end of the screw (41) when the movable portion (32, 33) is in the direct thrust position, said screw end being located at a distance from the damping element (50) when the movable portion (32, 33) is in the thrust reversal position.

4. The thrust reverser (30) according to claim 2, wherein one end of the screw (41) is embedded in a front or rear frame of cascades.

5. The thrust reverser (30) according to any one of claims 1 to 4, wherein the actuator (40) is devoid of an extension tube.

6. The thrust reverser (30) according to any one of claims 1 to 5, wherein the movable portion comprises cascade vanes (33).

7. The thrust reverser (30) according to claim 6, wherein the second connecting element (46) cooperates with a front or rear frame of the cascades (33).

8. The thrust reverser (30) according to any one of claims 1 to 5, comprising fixed cascade vanes (33).

9. The thrust reverser (30) according to any one of claims 1 to 8, comprising a tertiary lock connected to the fixed portion (10).

10. The thrust reverser (30) according to any one of claims 1 to 9, wherein the first connecting element (45) cooperates with a front frame (60) of the fixed portion.

11. A propulsion unit (1) for an aircraft, comprising a thrust reverser (30) according to any one of claims 1 to 10.

12. The propulsion unit (1) according to claim 11, comprising a fan casing (10), the first connecting element (45) cooperating with the fan casing (10).
